(19) Europäisches Patentamt
European Patent Office
Office européen des brevets

(11) Numéro de publication: **0 349 391 B1**

(12) **FASCICULE DE BREVET EUROPEEN**

(45) Date de publication de fascicule du brevet: **01.12.93**

(51) Int. Cl.$^5$: **G05B 19/04**

(21) Numéro de dépôt: **89401767.2**

(22) Date de dépôt: **22.06.89**

(54) **Dispositif programmable de commande de relais.**

(30) Priorité: **27.06.88 FR 8808717**

(43) Date de publication de la demande:
**03.01.90 Bulletin 90/01**

(45) Mention de la délivrance du brevet:
**01.12.93 Bulletin 93/48**

(84) Etats contractants désignés:
**DE ES FR GB IT**

(56) Documents cités:
**DE-B- 2 846 686**
**FR-A- 2 502 357**
**US-A- 4 075 707**

**ELECTRONIC ENGINEERING vol. 52, no. 633, janvier 1980, LONDRES, GB pages 37 - 54; LARSON ET DOWNEY: "FIELD PROGRAMMABLE LOGIC DEVICES"**

(73) Titulaire: **CROUZET Société Anonyme**
**4, rue François Ory**
**F-92128 Montrouge(FR)**

(72) Inventeur: **Chovin, André**
**Les Moutiers**
**Allex F-26400 Crest(FR)**
Inventeur: **Gary, Didier**
**15 Allée Zamenhof**
**F-26000 Valence(FR)**
Inventeur: **Taillebois, Jacques**
**9 Allée des Hortensias**
**F-26500 Bourg Les Valence(FR)**

(74) Mandataire: **Bloch, Gérard et al**
**2, square de l'Avenue du Bois**
**F-75116 Paris (FR)**

**EP 0 349 391 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un dispositif programmable de commande de relais. Dans la présente description, on entend par le terme relais aussi bien un relais électromécanique qu'un relais statique, c'est-à-dire un interrupteur commandé à semiconducteur.

On connait par le document FR-A-2502357 un dispositif selon le préambule de la revendication 1.

On connaît par ailleurs par le document DE-B-2846686 une grille de combinaison recevant des signaux de paramètres pour fournir des signaux de variables intermédiaires.

La présente invention vise à réaliser un dispositif programmable de commande de relais qui se prête à réaliser de nombreuses opérations liées à des commandes d'horloge et/ou à des comptages d'événements, un certain nombre de ces opérations résultant d'une combinaison logique d'événements d'entrée et/ou de coups d'horloge.

Un autre objet de la présente invention est de prévoir un tel dispositif programmable de commande de relais qui soit réalisable sous forme de circuit intégré monolithique.

Un autre objet de la présente invention est de réaliser un tel dispositif programmable de commande de relais qui utilise à l'intérieur d'un circuit intégré des éléments rémanents fonctionnant même en l'absence de tension d'alimentation tout en minimisant le nombre des éléments rémanents qui sont généralement des composants coûteux en surface occupée et en difficulté de réalisation à l'intérieur d'un circuit intégré.

Pour atteindre ces objets, la présente invention prévoit un dispositif programmable de commande de relais selon la revendication 1.

Ces objets, caractéristiques et avantages ainsi que d'autres de la présente invention seront exposés plus en détail dans la description suivante de modes de réalisation particuliers faite en relation avec les figures jointes parmi lesquelles :

La figure 1 est une représentation très schématique sous forme de blocs de l'architecture d'un dispositif selon la présente invention ;

La figure 2 est un schéma sous forme de blocs représentant de façon plus détaillée un mode de réalisation de la présente invention ;

Les figures 3 à 6 représentent la structure du système de programmation selon la présente invention partagé en quatre grilles de conditions dans le cas du mode de réalisation particulier illustré en figure 2 ;

La figure 7 illustre un exemple de machine de fabrication automatisée pouvant mettre en oeuvre pour sa commande un dispositif selon la présente invention ; et

Les figures 8 à 11 illustrent des exemples de connexion des grilles de conditions des figures 3 à 6 dans le cas de l'exemple d'application de la figure 7.

Ainsi, la figure 1 représente de façon très générale un dispositif programmable de commande de relais selon la présente invention. Le coeur de ce dispositif est constitué par un bloc de commande de fonction F qui fournit des signaux de sortie sur un bloc de sortie S comprenant par exemple deux sorties S1 et S2 propres à commander deux relais (non représentés).

Le bloc de fonction F reçoit des signaux d'événements et de commande à partir d'un bloc d'entrée E et des signaux d'horloge à partir d'un bloc H. Il est associé à un bloc de décomptage D qui reçoit du bloc de fonction des signaux en provenance des entrées d'horloge ou des entrées d'événements et fournit en retour ses sorties vers ce bloc de fonction pour agir d'une façon prédéterminée sur le bloc de sortie S. La programmation du bloc de fonction, qui est constitué d'éléments à mémoire non-rémanente, par exemple des bascules ou de simples transistors MOS, est assurée par un bloc de mémoire M qui maintient de façon rémanente une information de programmation fournie par un bloc de réglage R.

Le bloc de mémoire rémanente M comprend des cellules mémoire, de préférence organisées en mots de quatre bits comme on le verra ci-après qui peuvent par exemple être du type EEPROM, NOVRAM, RAM sauvegardé par pile ou supercapacité, etc.

Cette organisation générale d'un dispositif selon la présente invention sera expliquée plus en détail en relation avec la figure 2 dans le cadre d'un mode de réalisation particulier de la présente invention.

Le bloc de fonction F, qui constitue le coeur du dispositif selon la présente invention, reçoit des signaux d'horloge d'un bloc de base de temps H relié à un quartz Q. Cette horloge comprend plusieurs sorties fournissant des impulsions de chronométrage à des rythmes différents, par exemple des sorties G1 à G6. L'horloge H reçoit également une entrée du bloc de fonction, dénommée CDT, qui correspond à une condition de décomptage du temps. Les gammes de chronométrage G1 à G6 peuvent par exemple aller de O,1 seconde à une heure.

Le bloc de décomptage D de la figure 1 est réalisé sous forme de deux décompteurs D1 et D2 dont chacun comprend une entrée de déclenchement DD (DD1, DD2), une entrée d'armement AD (AD1, AD2), une entrée d'horloge HD (HD1, HD2), une sortie SD (SD1, SD2), et une entrée de présélection PR (PR1, PR2). Une entrée de mise en cascade CAS permet de faire fonctionner les deux décompteurs comme un décompteur unique de plus grande capacité. Toutes ces entrées et sorties sont couplées au bloc de fonction F.

Les blocs d'entrée et de sortie E et S de la figure 1 sont groupés sous forme d'un bloc unique E/S qui reçoit quatre entrées d'événements extérieurs E1 à E4 et les retransmet au bloc de fonction F. D'autre part, ce bloc fournit deux sorties de commande S1 et S2 dont chacune est conditionnée par des entrées en provenance du bloc de fonction à savoir une entrée AS d'activation de la sortie (AS1, AS2), une entrée DS de désactivation de la sortie (DS1, DS2) et une entrée CS d'inhibition de la sortie (CS1, CS2).

D'autre part, comme cela a été indiqué précédemment, le bloc de fonction F est couplé à un bloc de mémoire rémanente MR destiné à assurer lors d'une mise sous tension les connexions convenables des grilles contenues dans le bloc de fonction. Au bloc de fonction est également associé un bloc de mémoire volatile MV destiné à assurer des mémorisations intermédiaires, notamment lors des phases de réglage et d'affichage. Le bloc de mémorisation MR est programmé initialement par la sortie d'un bloc PR associé par un bus à un bloc de réglage R à actionnement par boutons poussoirs qui ne sera pas décrit plus en détail car sa fonction est classique.

De plus, on a indiqué sur la figure 2 un bloc d'affichage AFF couplé au bloc de réglage R, au bloc PR et au bloc de décomptage D, de façon classique. Un bloc de liaison L permet de connecter le bloc de programmation PR à un processeur externe dans le cas où les réglages sont réalisés en automatique, ou bien lorsqu'on veut procéder à des tests. D'autre part, les divers blocs mentionnés précédemment sont remis à zéro soit à la mise sous tension par l'intermédiaire du bloc MST, soit par le signal RAZ issu du bloc fonction F. On a également représenté un bus reliant le bloc PR aux décompteurs D1 et D2 pour assurer leur présélection et l'affichage de leur état.

## Bloc de fonction

On décrira ci-après plus en détail la structure du bloc de fonction et son mode de programmation car c'est l'un des avantages de l'invention que de prévoir une structure réalisable sous forme de circuit intégré utilisant un minimum d'éléments à mémoire rémanente.

Le bloc de fonction est constitué de grilles de condition. Chaque grille est formée d'un réseau matriciel de lignes et de colonnes dont chaque intersection est un élément semiconducteur commandable en ouverture ou en fermeture, par exemple un transistor MOS ou une bascule permettant d'établir une connexion entre une ou plusieurs lignes et une ou plusieurs colonnes.

On distinguera ci-après des grilles dites d'aiguillage où une seule connexion est possible sur une ligne donnée et sur une colonne donnée et des grilles dites de combinaison où des connexions sont possibles en plusieurs points d'une ligne et/ou d'une colonne pour permettre de fournir des combinaisons booléennes de données d'entrée.

Les grilles de combinaison nécessitent un adressage individuel de chacun des points de croisement des lignes et des colonnes alors que, pour les grilles d'aiguillage on peut utiliser un adressage permettant de réduire le nombre de points mémoire destinés à fixer leur programmation. Par exemple, pour une grille d'aiguillage à seize lignes et seize colonnes, il suffira pour chaque ligne d'utiliser un mot mémoire de quatre bits soit un ensemble de 16 x 4 = 64 bits de mémoire tandis que pour une grille de combinaison de la même dimension, il faudrait utiliser 16 x 16 bits de mémoire soit 256 mots points mémoire ou 64 mots mémoire de quatre bits.

Ainsi, l'un des aspects de l'invention consiste en une optimisation de la répartition des grilles en grilles d'aiguillage et en grille de combinaison de façon à réduire au minimum la dimension de la grille de combinaison.

La figure 3 représente une première grille d'aiguillage utilisée dans le cas du mode de réalisation de la figure 2 pour le conditionnement des décompteurs, des sorties et de la remise à zéro. Cette grille comprend un premier groupe d'entrées (colonnes) O, E1, E2, $\overline{E2}$, E3, $\overline{E3}$, E4, $\overline{E4}$, SD1, $\overline{SD1}$, SD2, $\overline{SD2}$ (dans le cadre de la présente description, une donnée soulignée désigne cette donnée inversée). D'autre part, cette grille comprend un second groupe d'entrées (colonnes) X, $\overline{X}$, Y. Les entrées X, Y correspondent à des variables intermédiaires comme cela sera indiqué ci-après. Cette grille comprend quatre premières sorties de paramètres V1 à V4 choisies parmi le premier groupe d'entrée et des deuxièmes sorties DD1, AD1, DD2, AD2, AS1, DS1, AS2, DS2 et RAZ choisies parmi l'ensemble des deux groupes d'entrées.

La figure 4 représente une deuxième grille d'aiguillage qui est une grille de conditions d'inhibition qui fournit des conditions d'inhibition CDT, CS1 et CS2 telles que définies précédemment parmi des données d'entrée correspondant aux données d'entrée de la première grille si ce n'est que la première colonne correspond à un 1 et non à un O.

La figure 5 représente une troisième grille d'aiguillage ou grille de programmation d'horloge qui reçoit comme entrées les données O, G1 à G6, E1 à E4, X, Y, SD1 et SD2 et fournit en sortie les signaux d'horloge susmentionnés HD1 et HD2.

Toutes ces grilles d'aiguillage comprennent 16 colonnes et respectivement 13, 3 et 2 lignes. Ainsi, il faudra un mot mémoire de quatre bits pour la programmation de chaque ligne soit un total de 13 + 3 + 2 = 18 mots de 4 bits.

La figure 6 représente une grille de condition du type grille de combinaison fournissant en fonction des quatre paramètres V1 à V4 sélectionnés parmi les entrées du premier groupe de la grille de la figure 3 des sorties de variables intermédiaires X et Y (d'où l'on pourra déduire le signal inverse $\overline{X}$ si on le souhaite).

Cette grille de combinaison permet de combiner ces variables V1 à V4 sous forme d'une somme de produits (ou en d'autres termes d'une combinaison de ET et de OU) et permet notamment d'écrire deux équations différentes comportant jusqu'à quatre sommes de quatre produits de variables. Avec une mémoire structurée en mots de quatre bits, cette grille doit contenir 6 mots mémoire. Chaque croisement de cette grille peut être identique à ceux des grilles d'aiguillage (et être déterminé par un point de mémoire rémanente) ou être un point de mémoire rémanente.

Ainsi, on voit que, grâce à la structure selon la présente invention, on doit prévoir seulement 18 + 6 soit 24 mots de quatre bits de mémoire rémanente. Bien que cela ne soit pas décrit en détail ici, il conviendra d'y ajouter trois mots de quatre bits pour la présélection (signaux PR1 et PR2) de chacun des décompteurs. On se trouve donc avec un total de mots de mémoire rémanente égal à 30 c'est-à-dire à 120 points de mémoire rémanente tout en permettant de fournir des combinaisons très vastes entre les signaux d'entrée (événements, signaux d'horloge et signaux des décompteurs).

## Exemple d'application de l'invention

On considèrera à titre d'exemple une machine de remplissage de caisses. Des caisses 10 sont transportées par une courroie transporteuse C1 vers un poste de travail associé à un détecteur de caisse 11. Les caisses sont arrêtées au niveau de ce poste de travail situé dans la zone de déversement d'une seconde courroie transporteuse C2 sur laquelle ont été chargées des pièces 13 dont on veut remplir la caisse. Un détecteur 14 permet de compter le nombre de pièces déversées.

Cette machine est mise en marche par un premier interrupteur qui fournit l'information de mise en marche au bloc MST de la figure 2. Ensuite, le démarrage d'un cycle est actionné par un bouton poussoir connecté à l'entrée E1 susmentionnée.

A ce moment, le convoyeur C1, piloté par la sortie S1 susmentionnée, amène une caisse en position de remplissage. Le détecteur de présence de caisse 11, par exemple une cellule ou un contact, fournit un ordre d'arrêt du convoyeur C1 qui est transmis à l'entrée E2 susmentionnée.

Lorsque la caisse est en position, le convoyeur C2, actionné par la sortie S2 susmentionnée procède au remplissage de la caisse.

Au cours du remplissage, le détecteur de pièce 14, un contact ou un photodétecteur relié à l'entrée E3 susmentionnée, est utilisé pour activer un comptage de pièces, ce qui est effectué par exemple par le décompteur D2 susmentionné de façon à déverser un nombre de pièces prédéterminé dans chaque caisse.
lorsque le décompteur D2 passe à zéro, le convoyeur C2 s'arrête et le cycle recommence de façon automatique.

En outre, on prévoit à titre de sécurité que, si aucune caisse n'est présente en position de remplissage au bout d'une durée choisie T1, le convoyeur C1 s'arrête automatiquement et que le cycle ne peut reprendre qu'avec un nouveau démarrage, c'est-à-dire une nouvelle poussée sur le bouton poussoir de début de cycle dont les informations sont fournies à l'entrée E1. Le comptage du temps T1 est assuré par le décompteur D1 en relation avec une arrivée de signaux d'horloge.

Ainsi, le convoyeur C1 doit se mettre en route dès que le signal de début de cycle est détecté ou dès qu'un remplissage de caisse est terminé (ce qui correspond avec les notations précédentes à l'incidence d'un signal sur l'entrée E1 ou à la sortie de fin de décomptage du décompteur D2 qui, par exemple, est réglé à 8 dans le cas où l'on veut mettre 8 pièces par caisse).

Le convoyeur C1 s'arrête chaque fois qu'une présence de caisse est détectée (Entrée E2). Il s'arrête également si, un temps déterminé après le lancement du convoyeur C1, aucune caisse n'a été détectée pendant un intervalle de temps T1, comme cela est déterminé par le décompteur D1 qui reçoit des signaux d'horloge de la gamme appropriée.

Le convoyeur C2 est mis en route dès qu'un détecteur de présence 11 détecte la présence de la caisse 10, c'est-à-dire dès que l'entrée E2 est alimentée. Il est arrêté dès que le décompteur D2 a terminé son comptage, c'est-à-dire quand le signal $\overline{SD2}$ est fourni.

Pour satisfaire à ces diverses exigences, on s'aperçoit qu'il suffit de prendre comme signaux de paramètres V1 à V4, respectivement, les signaux E1, SD2, E2 et SD1 pour fournir comme signaux X et Y :

X = V1 + V2 = E1 + SD2

(ici le + désigne une fonction OU)

Y = V3 + V4 = E2 + SD1

Les figures 8 à 11 illustrent, dans la même représentation que les figures 3 à 6, les grilles du bloc de fonction dans leur état de conditionnement propre à satisfaire aux fonctions précédemment énoncées. Les croix dans ces figures indiquent les emplacements d'interconnexion de lignes et de colonnes.

Ainsi, à la figure 8, on peut voir une croix qui fait correspondre l'entrée E1 à la sortie V1 et de même l'entrée SD2 correspond à la sortie V2, l'entrée E2 à la sortie V3 et l'entrée SD1 à la sortie V4. Ces signaux V1, V2, V3 et V4 sont combinés dans la grille de combinaison illustrée en figure 11 de sorte que X corresponde à E1 OU SD2 (E1 + SD2) et Y à E2 OU SD1 (E2 + SD1).

Ensuite, dans la partie inférieure de la première grille de conditionnement des décompteurs et des sorties illustrée en figure 8, on peut voir que la variable X correspond aux sorties DD1 et AD1 (déclenchement et armement du décompteur D1), que le signal E2 correspond aux sorties DD2 et AD2 (déclenchement et armement du décompteur D2), que la variable X correspond au signal AS1 (activation de la sortie S1, mise en route du convoyeur C1), que la variable Y correspond à la sortie DS1 (désactivation de la sortie S1), que l'entrée E2 correspond à AS2 et le signal $\overline{SD2}$ à DS2. La sortie de remise à zéro RAZ n'est jamais utilisée et est toujours reliée à la colonne O.

Dans le schéma de la figure 9, correspondant à la grille de conditions d'inhibition, on voit qu'aucune condition particulière n'est imposée sur l'horloge (CDT) ni sur la sortie S1 (CS1) mais par contre qu'une condition est imposée à la sortie S2 (CS2), à savoir qu'un signal existe sur l'entrée E2, c'est-à-dire la condition de présence d'une caisse.

Enfin, la figure 10 représente la grille de programmation d'horloge et l'on voit que le signal d'horloge HD1 appliqué au décompteur D1 correspond à la sortie d'horloge G2 (gamme dans laquelle une impulsion est fournie toutes les secondes) tandis que le signal d'horloge HD2 sur le décompteur D2 correspond au signal E3, c'est-à-dire à un comptage de pièces.

On voit bien là l'un des avantages du dispositif selon la présente invention, c'est-à-dire qu'avec une conception très simple, on peut mélanger des ordres liés à des décomptages de séquences d'événements et à des décomptages temporels.

Bien entendu, la présente invention est susceptible de diverses variantes dans le choix des nombres d'entrée et de sortie ainsi que dans la mise en oeuvre matricielle. Ainsi, dans un circuit intégré, les diverses grilles d'aiguillage pourraient être regroupées en un réseau unique.

**Revendications**

**1.** Dispositif programmable de commande de relais permettant de déterminer le niveau d'au moins deux sorties (S1, S2) propres à commander lesdits relais en fonction de signaux incidents sur des entrées (E1....E4) et de signaux de chronométrage (G1...G4) en provenance d'une horloge (H), comprenant des décades de décomptage (D1,D2) et des moyens de programmation et de reprogrammation, et comprenant en outre :
- des mémoires rémanentes reprogrammables (MR), et
- un bloc de fonction (F) dont la configuration est commandée par les sorties desdites mémoires rémanentes, ce bloc de fonction comprenant :
  . des grilles d'aiguillage dans lesquelles à toute entrée correspond au plus une sortie, ces grilles recevant divers signaux d'entrée et des signaux de variables intermédiaires (X, Y), et fournissant des signaux de paramètres (V1....V4) et divers signaux de sortie,
  . une grille de combinaison dans laquelle toute sortie peut correspondre à une combinaison logique des entrées,

caractérisé par le fait que :
- la grille de combinaison reçoit lesdits signaux de paramètres (V1....V4) pour fournir lesdits signaux de variables intermédiaires (X, Y),
- les signaux de paramètres sont au nombre de quatre au moins et les variables intermédiaires au nombre de deux au moins,
- le dispositif comprend quatre entrées (E1....E4), deux décompteurs (D1, D2), une horloge (H) à plusieurs gammes et deux sorties de commande (S1, S2),
- les grilles d'aiguillage comprennent :
  . une première grille recevant notamment les signaux d'entrée (E1...E4) et leurs compléments ($\overline{E1...E4}$), les signaux de sortie (SD1, SD2) des décompteurs et leurs compléments ($\overline{SD1}$, $\overline{SD2}$), les deux signaux de variables intermédiaires (X, Y) et fournissant d'une part quatre signaux de paramètres (V1...V4) choisis parmi les signaux reçus à l'exclusion des variables intermédiaires, d'autre part, des signaux d'activation et désactivation des décompteurs, des sorties et de la remise à zéro (DD1, DD2, AD1, AD2, AS1, AS2, DS1, DS2, RAZ)

. une deuxième grille recevant sensiblement les mêmes signaux que la première et fournissant des signaux de condition d'inhibition de décomptage du temps ou de sortie (CS1, CS2), et

. une troisième grille recevant les diverses gammes d'horloge (G1...G6), les signaux d'entrée (E1...E4), les variables intermédiaires (X, Y) et les signaux de sortie (SD1, SD2) des décompteurs et fournissant l'un de ces signaux à l'entrée d'horloge (HD1, HD2) de chaque décompteur ; et

- la grille de combinaison reçoit lesdits quatre signaux de paramètres (V1...V4) et fournit lesdits deux signaux de variables intermédiaires (X,Y).

**2.** Dispositif selon la revendication 1, caractérisé en ce qu'il comprend en outre des moyens d'introduction de programme (R) dans lesdites mémoires statiques reprogrammables, du type à boutons poussoirs.

**3.** Dispositif selon l'une quelconque des revendications 1 et 2, caractérisé en ce que les mémoires reprogrammables sont programmées par connexion (L) à un microprocesseur.

**4.** Dispositif selon l'une quelconque des revendications 1 à 3, caractérisé en ce qu'il comprend en outre un bloc d'affichage (AFF) des données mémorisées et du déroulement de la programmation.

## Claims

**1.** A programmable relay control device for determining the level of at least two outputs (S1,S2) as a function of signals present at inputs (E1...E4) and timing signals (G1...G4) from a clock (H), comprising down-counting decades (D1,D2) and programming and reprogramming means, which device further comprises:

- reprogrammable remanent memories (MR), and
- a function block (F) whose configuration is controlled by the outputs of said remanent memories, this function block comprising:

. routing grids in which one output at most corresponds to every input, these grids receiving different input signals and intermediate variable signals (X,Y) and delivering parameter signals (V1...V4) and different output signals,

. a combination grid in which every output may correspond to a logic combination of the inputs characterized in that:

- the combination grid receives said said parameter signals (V1...V4) for delivering said intermediate variable signals (X,Y),
- said device comprises four inputs (E1...E4), two down-counters (D1,D2) a clock (H) with several ranges and two control outputs (S1,S2),
- said routing grids comprise:

. a first grid receiving in particular the input signals (E1...E4) and their complements ($\overline{E1}$...$\overline{E4}$) the output signals (SD1,SD2) of the down-counters and their complements ($\overline{SD1}$,$\overline{SD2}$), the two intermediate variable signals (X,Y) and delivering, on the one hand, four parameters signals (V1...V4) chosen from the signals received to the exclusion of the intermediate variables and, on the other hand, the signals for activating and de-activating the down-counters, the outputs and resetting (DD1,DD2,AD1,AD2,AS1,AS2,DS1,DS-2,RAZ)

. a second grid receiving substantially the same signals as the first one and delivering condition signals (CS1,CS2) for inhibiting the outputs or time down-counting, and

. a third grid receiving the different clock ranges (G1...G6) the input signals (E1...E4), the intermediate variables (X,Y) and the output signals (SD1,SD2) of the down-counters and delivering one of these signals to the clock input (HD1,HD2) of each down-counter; and

- the combination grid receives said four parameter signals (V1...V4) and delivers said two intermediate variable signals (X,Y).

**2.** The device as of claim 1, characterized in that it further comprises means (R) for introducing programs into said reprogrammable static memories, of push button type.

**3.** The device of anyone of claims 1 and 2, characterized in that said reprogrammable memories are programmed by connection (L) to a microprocessor.

**4.** The device of anyone of claims 1 to 3, characterized in that it further comprises a block (AFF) for displaying the stored data and the running of the program.

## Patentansprüche

**1.** Programmierbare Einrichtung zur Relaissteuerung, die es gestattet, die Stufe von mindestens zwei Ausgängen (S1, S2) zu bestimmen, welche die erwähnten Relais in Abhängigkeit von Ereignissignalen an den Eingängen (E1....E4) und von Taktsignalen (G1...G4), die von einem Taktgeber (H) geliefert werden, steuern können, umfassend Abwärtszähldekaden (D1, D2) und Mittel zur Programmierung und Umprogrammierung sowie außerdem

- umprogrammierbare remanente Speicher (MR) und
- einen Funktionsblock (F), dessen Konfiguration von den Ausgängen der remanenten Speicher gesteuert wird, wobei dieser Funktionsblock umfaßt:
  - Verzweigungsgatter, bei denen jedem Eingang höchstens ein Ausgang entspricht, wobei diese Gatter verschiedene Eingangssignale und Zwischenvariablensignale (X, Y) empfangen und Parametersignale (V1....V4) und verschiedene Ausgangssignale liefern,
  - ein Verknüpfungsgatter, bei dem jeder Ausgang einer logischen Verknüpfung der Eingänge entsprechen kann,

dadurch gekennzeichnet, daß:

- das Verknüpfungsgatter die Parametersignale (V1....V4) empfängt, um die Zwischenvariablensignale (X, Y) zu liefern,
- es mindestens vier Parametersignale und mindestens zwei Zwischenvariable gibt,
- die Einrichtung vier Eingänge (E1....E4), zwei Abwärtszähler (D1, D2), einen Taktgeber (H) mit mehreren Bereichen und zwei Steuerausgänge (S1, S2) aufweist,
- die Verzweigungsgatter umfassen:
  - ein erstes Gatter, das insbesondere die Eingangssignale (E1...E4) und ihre Komplemente ($\overline{E1}$...$\overline{E4}$), die Ausgangssignale (SD1, SD2) der Abwärtszähler und ihre Komplemente ($\overline{SD1}$, $\overline{SD2}$), die zwei Zwischenvariablensignale (X,Y) empfängt und einerseits vier Parametersignale (V1...V4), gewählt unter den empfangenen Signalen mit Ausnahme der Zwischenvariablen, und andererseits Signale zur Aktivierung und Desaktivierung der Abwärtszähler, der Ausgänge und zur Nullrückstellung (DD1, DD2, AD1, AD2, AS1, AS2, DS1, DS2, RAZ) liefert,
  - ein zweites Gatter, das im wesentlichen die gleichen Signale empfängt wie das erste und Signale für den Zustand der Hemmung der Zeitabwärtszählung oder eines Ausgangs (CS1, CS2) liefert, und
  - eine drittes Gatter, das die verschiedenen Taktbereiche (G1...G6), die Eingangssignale (E1...E4), die Zwischenvariablen (X, Y) und die Ausgangssignale (SD1, SD2) der Abwärtszähler empfängt und eines dieser Signale an den Takteingang (HD1, HD2) eines jeden Abwärtszählers liefert; und
- das Verknüpfungsgatter die vier Parametersignale (V1...V4) empfängt und die zwei Zwischenvariablensignale (x, Y) liefert.

**2.** Einrichtung nach Anspruch 1, dadurch gekennzeichnet, daß sie außerdem Mittel zur Programmeingabe (R) in die umprogrammierbaren statischen Speicher in der Art von Druckknöpfen umfaßt.

**3.** Einrichtung nach irgendeinem der Ansprüche 1 und 2, dadurch gekennzeichnet, daß die umprogrammierbaren Speicher durch eine Verbindung (L) mit einen Mikroprozessor programmiert werden.

**4.** Einrichtung nach irgendeinem der Ansprüche 1 bis 3, dadurch gekennzeichnet, daß sie außerdem einen Anzeigeblock (AFF) zur Anzeige der gespeicherten Daten und des Programmablaufs umfaßt.

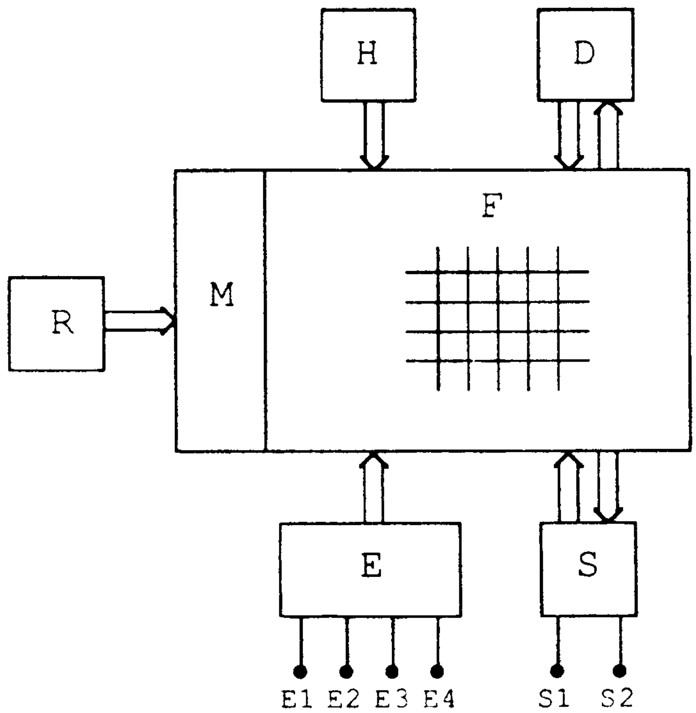


Figure 1

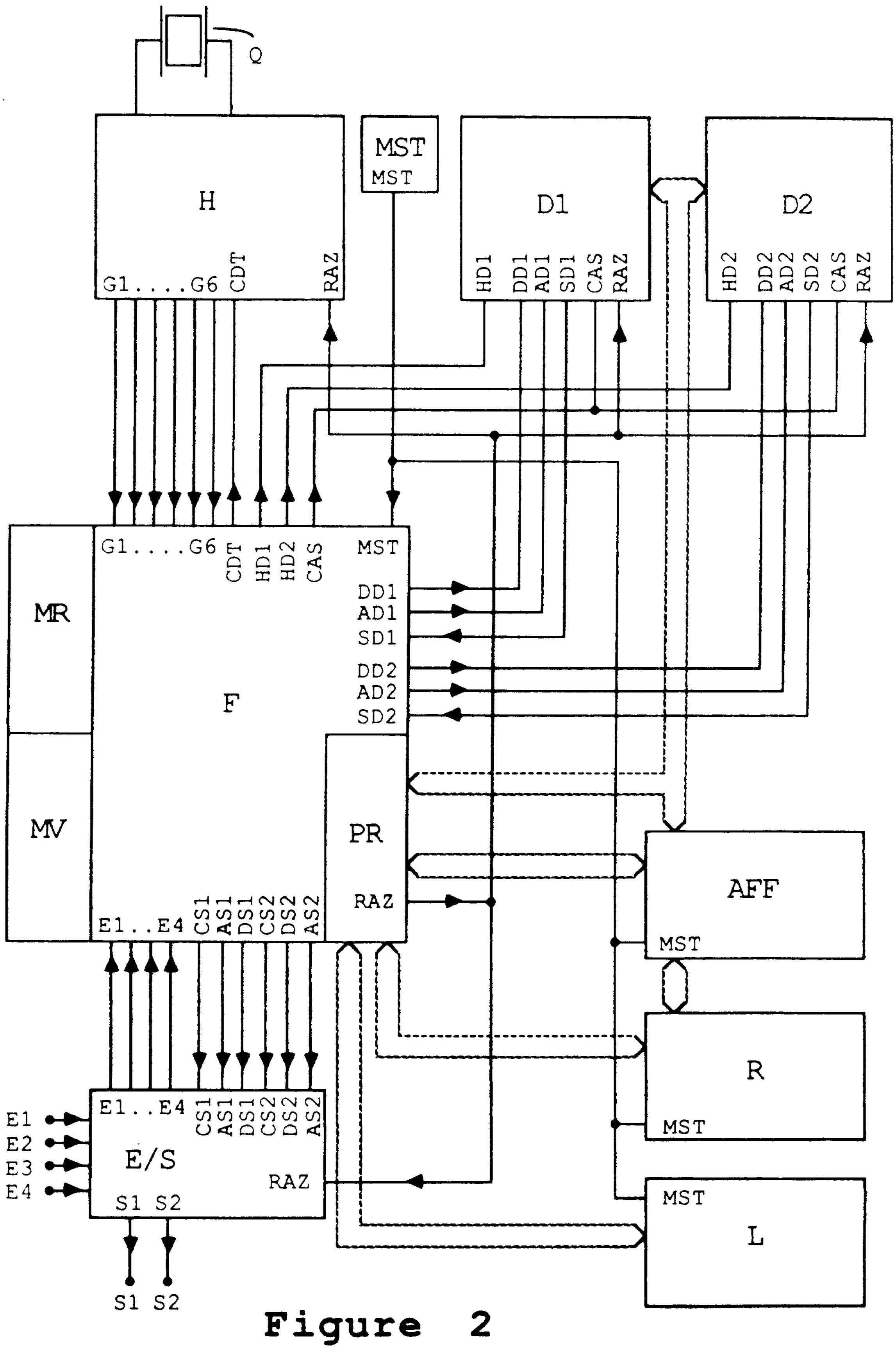
Q
H
G1....G6
CDT
RAZ
MST
MST
D1
HD1
DD1
AD1
SD1
CAS
RAZ
D2
HD2
DD2
AD2
SD2
CAS
RAZ
MR
MV
F
G1....G6
CDT
HD1
HD2
CAS
MST
DD1
AD1
SD1
DD2
AD2
SD2
PR
RAZ
E1..E4
CS1
AS1
DS1
CS2
DS2
AS2
AFF
MST
R
MST
MST
L
E1
E2
E3
E4
E/S
E1..E4
CS1
AS1
DS1
CS2
DS2
AS2
RAZ
S1 S2
S1 S2

**Figure 2**

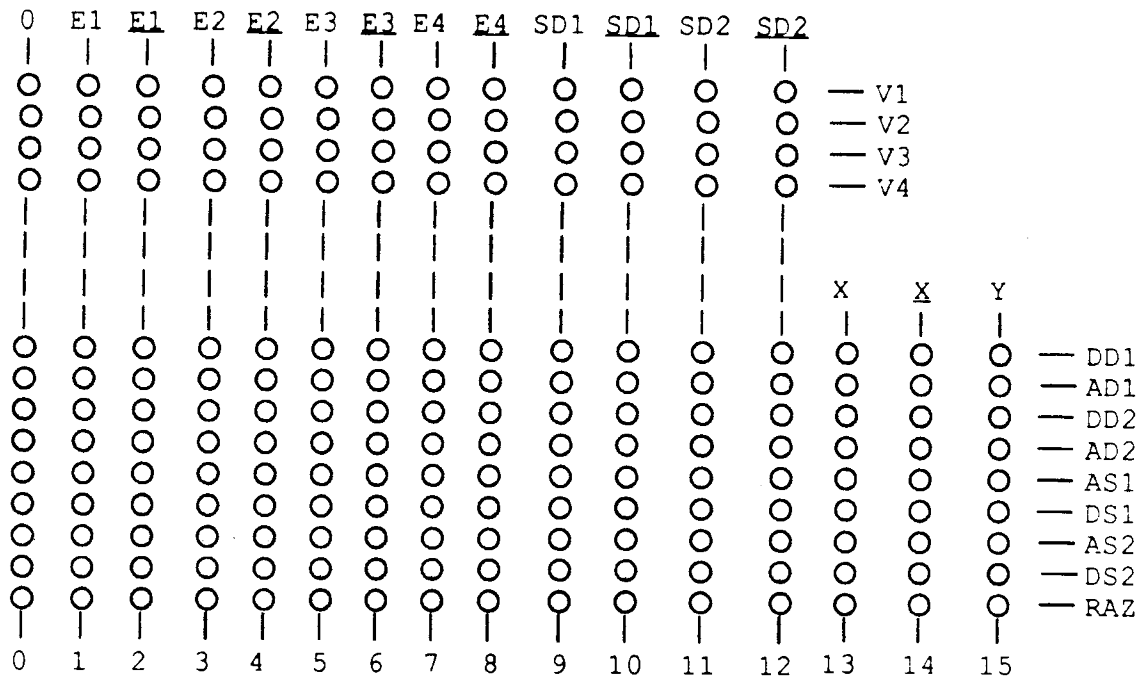


Figure 3

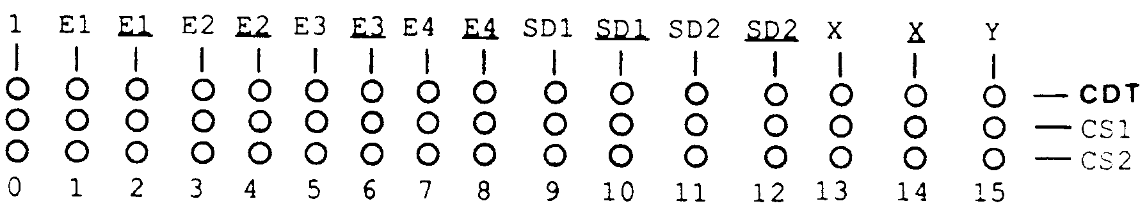


Figure 4

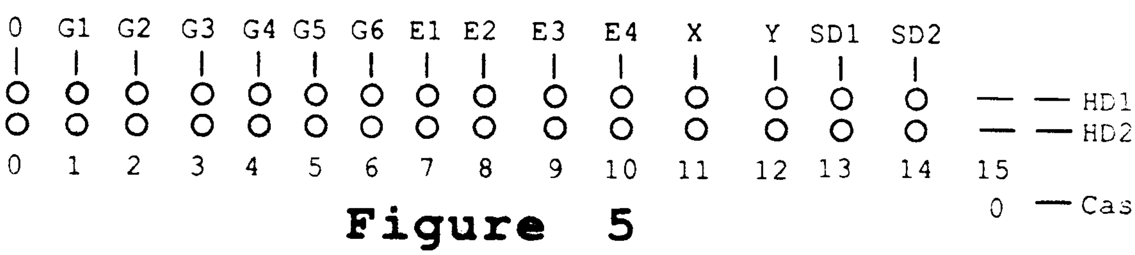


Figure 5

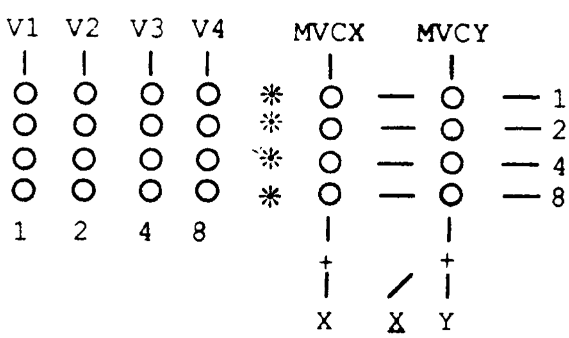


Figure 6

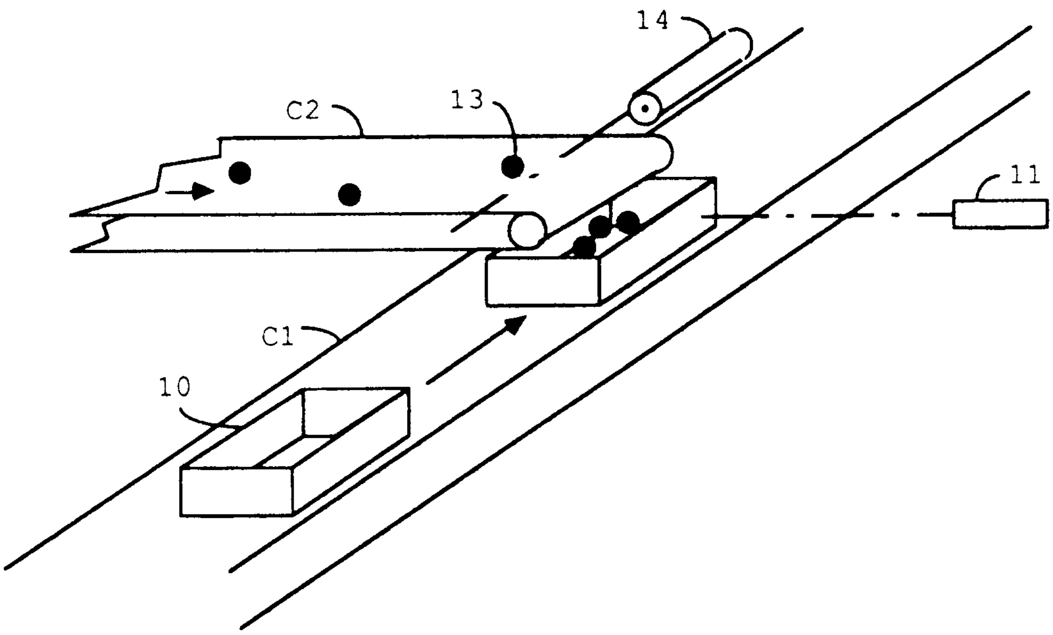


Figure 7

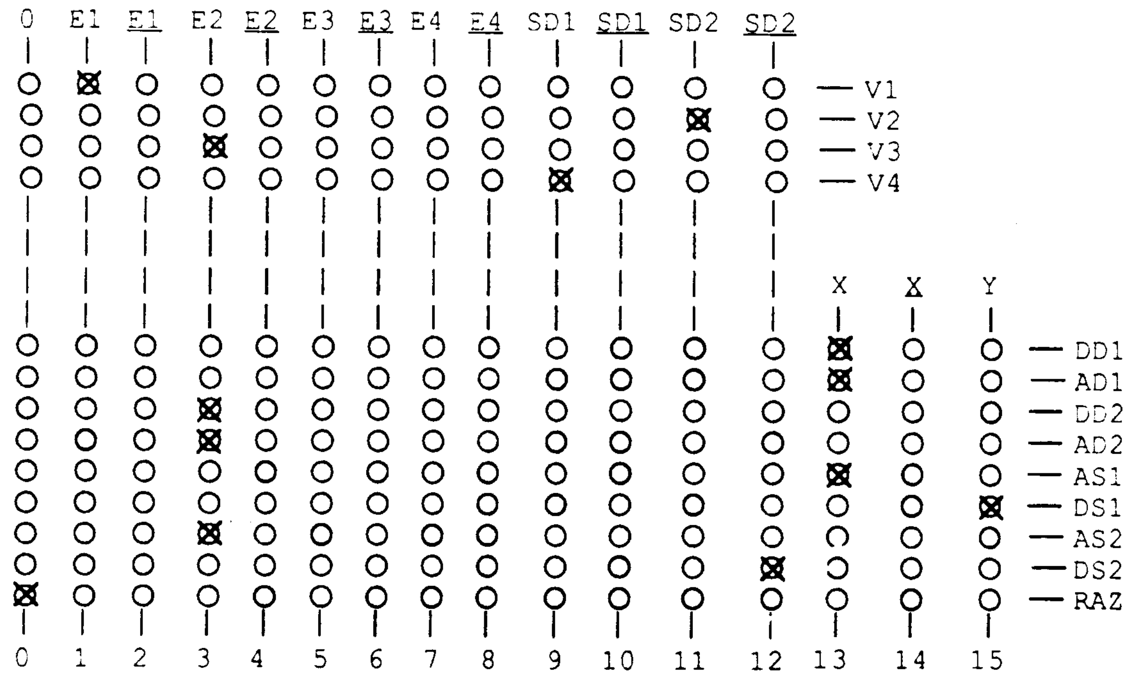


Figure 8

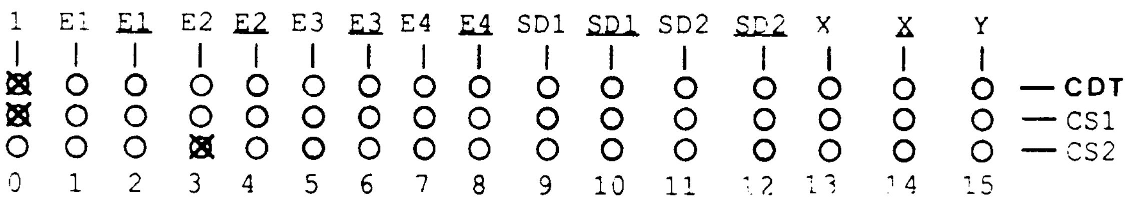


Figure 9

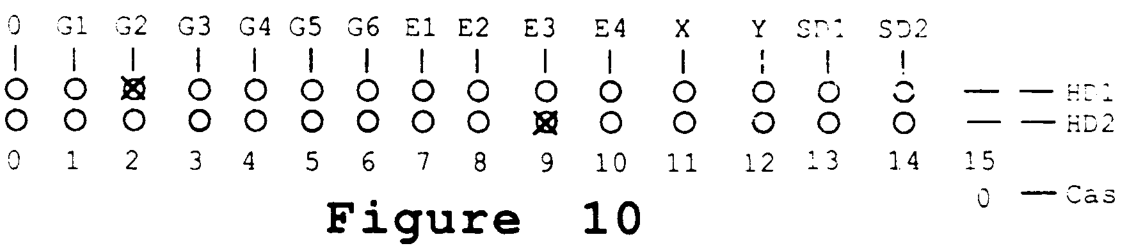


Figure 10

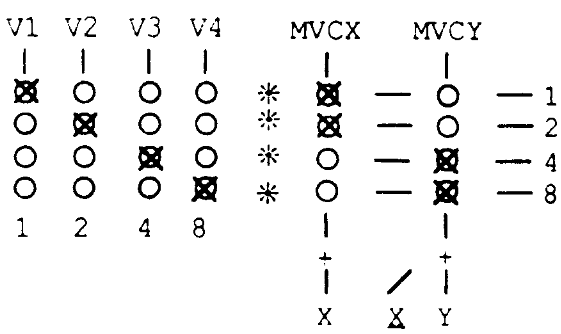


Figure 11